# EUROPÄISCHE PATENTSCHRIFT

(11) **EP 3 818 290 B1**
(45) Veröffentlichungstag und Bekanntmachung des Hinweises auf die Patenterteilung: **04.12.2024**
(21) Anmeldenummer: 19736670.1
(22) Anmeldetag: 03.07.2019
(51) Int. Cl.: F16K 37/00

(54) **DIAGNOSE VON MÖGLICHEN URSACHEN FÜR VERÄNDERUNGEN AN EINEM STELLVENTIL**
DIAGNOSIS OF POSSIBLE CAUSES OF CHANGES IN A CONTROL VALVE
DIAGNOSTIC DE CAUSES PROBABLES DE MODIFICATIONS SUR UNE SOUPAPE DE RÉGLAGE

(30) Priorität: 03.07.2018 DE 102018116048
(43) Veröffentlichungstag der Anmeldung: 12.05.2021
(73) Patentinhaber: Samson Aktiengesellschaft, 60314 Frankfurt am Main (DE)
(72) Erfinder: WAGNER-STÜRZ, David, 64367 Mühltal (DE)
(74) Vertreter: Köllner, Malte
(86) Internationale Anmeldenummer: PCT/EP2019/067871
(87) Internationale Veröffentlichungsnummer: WO 2020/007923

(56) Entgegenhaltungen:
- EP-A1- 2 792 919
- WO-A1-2011/135155
- WO-A1-2013/184863
- WO-A1-95/06276
- WO-A1-97/16776
- DE-A1- 10 344 088
- DE-A1- 19 723 650
- US-A- 4 523 286
- US-A1- 2016 169 410
- US-B2- 7 996 096

## Beschreibung

### Gebiet der Erfindung

Die Erfindung betrifft ein Verfahren zur Diagnose von möglichen Ursachen für Veränderungen an mindestens einem Stellventil mit einem Stellglied, an einer Anlage, deren Teil das Stellventil ist, oder an einem Prozess, der auf der Anlage durchgeführt wird, sowie ein Stellventil mit entsprechenden Mitteln.

Stellventile, auch Prozessventile genannt, bestehen aus einem beweglichen Stellglied bzw. Ventilglied und einer Öffnung im Ventilgehäuse. Das Ventilglied ist in der Lage, diese Öffnung entweder teilweise bzw. vollständig freizugeben oder zu verschließen.

Optimierungen des Betriebs und der Wartung dieser Ventile, sowie das frühzeitige Erkennen möglichen Fehlverhaltens bzw. von Fehlauslegungen solcher Ventile sind in der Praxis sehr wichtig.

### Stand der Technik

Die Druckschrift EP 315 391 B1 beschreibt mehrere Abtastsysteme, bei denen Abtastwerte mit Referenzwerten verglichen werden, um Abweichungen beim Betrieb eines Ventils festzustellen. Nachteilig ist dabei, dass entweder zusätzliche Kraftsensoren oder zusätzliche Abtasteinrichtungen benötigt werden, um auf einen Verschleiß des Ventils schließen zu können. Der Arbeitspunkt des Ventils wird nicht berücksichtigt.

In EP 2 884 358 B1 wird ein Steuerungssystem für eine komplette Anlage beschrieben, das Prozessdaten verwendet und diese zu Normal-Werten in Beziehung setzt. Arbeitspunkte bzw. Arbeitsbereiche der einzelnen beteiligten Ventile werden nicht ausgewertet, vielmehr geht es im Wesentlichen um eine komplexe Anlagensteuerung.

Die Druckschrift DE 197 23 650 A1 beschreibt ein Verfahren und eine Vorrichtung zur Überwachung eines Stellgeräts mit mindestens einem Stellantrieb, einem Ventil, einer Spindel und einem Stellungsregler.

Aus der Veröffentlichung WO 2013/184863 A1 sind Verfahren und Vorrichtungen zum Überwachen und/oder Steuern eines pneumatischen Stellantriebes eines Ventils bekannt. Bei diesen Verfahren werden insbesondere Fehlerzustände erkannt und in Folge davon z.B. eine Sicherheitsposition des Ventils eingestellt.

### Aufgabe

Aufgabe der Erfindung ist es, Verfahren und Vorrichtungen zur Diagnose von möglichen Ursachen für Veränderungen an mindestens einem Stellventil, einer Anlage, deren Teil das Stellventil ist, oder einem Prozess anzugeben, die ohne zusätzliche Sensoren oder Abtasteinrichtungen auskommen.

### Lösung

Diese Aufgabe wird durch die Gegenstände der unabhängigen Ansprüche gelöst. Vorteilhafte Weiterbildungen der Gegenstände der unabhängigen Ansprüche sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Zur Lösung der Aufgabe wird ein Verfahren zur Diagnose von möglichen Ursachen für Veränderungen an mindestens einem Stellventil mit einem Stellglied, an einer Anlage, deren Teil das Stellventil ist, oder an einem Prozess, der auf der Anlage durchgeführt wird, vorgeschlagen. Das Verfahren weist die folgenden Schritte auf:
Wenn sich das Stellglied nicht bewegt, also insbesondere dann, wenn keine Bewegung vorgesehen ist und kein Steuerimpuls vorliegt, werden zu einer Mehrzahl von Zeitpunkten Daten betreffend die Stellung des Stellglieds erfasst. Diese Daten können beispielsweise die genaue Position des Stellglieds oder der Zustand des zugehörigen Reglers sowie der zugehörige Zeitpunkt sein. Dieses Erfassen geschieht zumindest in einem ersten und in einem zweiten Zeitintervall, typischerweise in regelmäßigen zeitlichen Abständen. Es werden Charakteristika der Daten betreffend die Stellung des Stellgliedes aus dem ersten Zeitintervall ermittelt. Dabei kann es sich beispielsweise um den Arbeitspunkt, einen Mittelwert, dessen Varianz, einen Arbeitsbereich, oder, falls vorhanden, lokale Maxima handeln. Für die Untersuchung von Arbeitspunkt bzw. Arbeitsbereich ist hierbei besonders von Interesse, ob eine Häufung der Daten bestimmt werden kann. Die gleichen Charakteristika werden für die Daten betreffend die Stellung des Stellgliedes aus dem zweiten Zeitintervall ermittelt. Die weiteren Schritte werden nur durchgeführt, wenn für jedes betrachtete Zeitintervall zu den Charakteristika der Daten aus dem betrachteten Zeitintervall gehört, dass der Stellung des Stellgliedes mindestens ein lokales Maximum zugewiesen werden kann. Nur dann ist eine Bestimmung des Arbeitspunktes bzw. Arbeitsbereichs ohne große Unsicherheit und/oder großen Aufwand möglich. Ist dies erfüllt, werden die Charakteristika der Daten betreffend die Stellung des Stellgliedes aus den beiden Zeitintervallen verglichen, um Veränderungen zu detektieren. Dabei kann es sich insbesondere um Veränderungen des Arbeitspunktes bzw. des Ventilkegels oder des Ventilsitzes handeln. Aus festgestellten Unterschieden in den Charakteristika werden mögliche Ursachen für Veränderungen an dem mindestens einen Stellventil, an der Anlage oder an dem Prozess diagnostiziert, und diese Diagnose wird ausgegeben.

Auf diese Weise lässt sich ohne zusätzliche Sensoren oder komplizierte Überwachungssysteme in einfacher Weise detektieren, ob sich der Zustand des Prozesses oder des Stellventils ändert, und insbesondere aus dieser Veränderung eine Diagnose ableiten, die es ermöglicht, frühzeitig bzw. in vorausschauender Weise auf sich abzeichnende Probleme oder Fehlentwicklungen zu reagieren.

Selbstverständlich ist es sinnvoll, wenn in einem zusätzlichen Schritt die Diagnose an der Anlage und/oder dem Stellventil überprüft wird.

Dadurch, dass festgestellte Unterschiede in den Charakteristika der Daten aus den beiden Zeitintervallen auf ihre Signifikanz hin überprüft werden, kann sichergestellt werden, dass die Diagnose auf wirklichen Effekten beruht. Fehlalarme und unsinnige Diagnosen können so unterdrückt werden.

Für eine sinnvolle Auswertung der Daten, insbesondere in Bezug auf den Arbeitspunkt bzw. Arbeitsbereich des Stellventils, ist es hilfreich, wenn die Daten betreffend die Stellung des Stellglieds aussortiert und nicht erfasst werden, wenn die zugehörige Position des Stellgliedes 0% oder 100% entspricht. Dies entspricht jeweils der geschlossenen und der vollständig geöffneten Ventilstellung, die mit dem Arbeitspunkt des Ventils naturgemäß nichts zu tun haben.

Besonders aussagekräftig wird die Diagnose, wenn für jedes betrachtete Zeitintervall aus den Charakteristika der Daten ein Arbeitspunkt und/oder ein Arbeitsbereich des Stellventils bestimmt werden.

Eine falsche Auslegung der Größe des Stellventils kann diagnostiziert werden, wenn der Arbeitspunkt nicht einer Ventilstellung zwischen 50% und 70% entspricht. Das ist darin begründet, dass Stellventile bei einer Stellung von etwa 70% am effektivsten arbeiten. Aus Sicherheitsgründen ist oft eine gewisse Überdimensionierung der Ventile gewünscht.

Eine Änderung am Prozess oder eine Veränderung des von dem Ventil gesteuerten Fluids kann diagnostiziert werden, wenn Unterschiede in den Charakteristika der Daten zweier Zeitintervalle festgestellt werden, wobei die Zeitintervalle um nicht mehr als zwei Wochen, bevorzugt eine Woche, besonders bevorzugt 96 Stunden, ganz besonders bevorzugt 48 Stunden auseinanderliegen. Solche Änderungen sind als kurzfristig anzusehen und können im Wesentlichen nicht durch Verschleißerscheinungen hervorgerufen worden sein.

Verschleiß oder ein Defekt an dem Ventil kann diagnostiziert werden, wenn Unterschiede in den Charakteristika der Daten zweier Zeitintervalle nur festgestellt werden, wenn die Zeitintervalle um mehr als 3 Wochen, bevorzugt mehr als 2 Monate, besonders bevorzugt mehr als 6 Monate, ganz besonders bevorzugt mehr als ein Jahr auseinanderliegen. Solche Änderungen sind langfristiger Natur und entsprechen also nicht Prozessänderungen.

Ablagerungen auf dem Ventilsitz oder Ventilkegel können diagnostiziert werden, wenn der Arbeitspunkt und/oder Arbeitsbereich zu einer weiter geöffneten Ventilstellung hin verschoben wird. Derartige Ablagerungen verringern den Durchfluss durch das Ventil.

Abnutzung oder Verschleiß des Ventilsitzes und/oder Ventilkegels kann diagnostiziert werden, wenn der Arbeitspunkt und/oder Arbeitsbereich zu einer stärker geschlossenen Ventilstellung hin verschoben wird. Solche Verschleißerscheinungen erhöhen den Durchfluss durch das Ventil.

Wird nicht nur ein Arbeitspunkt, sondern ein Arbeitsbereich mit einer Breite bestimmt, kann aus einer Zunahme der Breite dieses Arbeitsbereichs eine Abnahme der Stabilität des Prozesses diagnostiziert werden, und/oder aus einer Abnahme der Breite des Arbeitsbereichs kann entsprechend eine Zunahme der Stabilität des Prozesses diagnostiziert werden.

Wird eine Diagnose von möglichen Ursachen für Veränderungen an einer Anlage oder einem Prozess mit einer Mehrzahl von Ventilen vorgesehen, kann dann ein Defekt an einer Pumpe diagnostiziert werden, wenn bei einer Mehrzahl von Ventilen, die mit der Pumpe in Wechselwirkung stehen, der Arbeitspunkt und/oder Arbeitsbereich zu einer weiter geöffneten Ventilstellung hin verschoben wird. Dann ist nämlich bei dieser Mehrzahl von Ventilen gemeinsam der Durchfluss niedriger als erwartet, was gegen eine Ursache bei einem einzelnen dieser Ventile spricht.

Ein besonders günstiges Verfahren zum Bestimmen des Arbeitsbereichs des Stellventils ergibt sich, wenn im betrachteten Zeitintervall folgende Schritte ausgeführt werden: Aus den Daten betreffend die Stellung des Stellglieds wird ein Histogramm gebildet. Das lokale Maximum der Häufigkeiten der Stellung des Stellglieds in diesem Histogramm wird bestimmt und dem Arbeitsbereich zugewiesen. Solange die dem Arbeitsbereich zugewiesene Häufigkeit weniger als 50% der Gesamthäufigkeit beträgt, wird die dem Arbeitsbereich im Histogramm jeweils direkt benachbarte Stellung des Stellglieds mit der größten Häufigkeit dem Arbeitsbereich hinzugefügt. Dadurch erhält man den Bereich um das lokale Maximum herum, in dem mindestens 50% aller Positionsdaten des Stellglieds liegen. Es liegt also nicht nur ein lokales Maximum bei einer scharfen Position vor, sondern ein zusammenhängender Bereich mit einer gewissen Breite, der die Positionen umfasst, in denen sich das Stellglied des Stellventils am häufigsten befindet.

Die Aufgabe wird auch gelöst durch ein Stellventil, mit Mitteln zum Erfassen von Daten zur Stellung des Stellglieds und des zugehörigen Zeitpunktes, wobei diese Mittel so konfiguriert sind, dass sie Daten zur Stellung des Stellglieds und den jeweils zugehörigen Zeitpunkt erfassen können, wenn sich das Stellglied nicht bewegt, d.h. insbesondere, wenn keine Bewegung des Stellgliedes (120) vorgesehen ist und/oder kein Steuerimpuls vorliegt. Außerdem mit Mitteln zum Bestimmen von Zeitintervallen, wobei diese Mittel zumindest ein erstes und ein zweites Zeitintervall bestimmen können, und wobei Daten zur Stellung des Stellglieds und der jeweils zugehörige Zeitpunkt in den zumindest ersten und zweiten Zeitintervallen erfasst werden. Zudem sind Mittel zum Bestimmen von Charakteristika von Daten aus Zeitintervallen vorhanden, wobei diese Mittel so konfiguriert sind, dass sie die gleichen Charakteristika der Daten aus dem vorgenannten ersten und dem vorgenannten zweiten Zeitintervall bestimmen und miteinander vergleichen können. Dabei werden die Charakteristika aus einer Gruppe ausgewählt werden, die zumindest die folgenden Mitglieder umfasst: den Arbeitspunkt, einen Mittelwert, dessen Varianz, einen Arbeitsbereich, lokale Maxima. Das Stellventil hat auch Mittel zum Feststellen, ob für jedes betrachtete Zeitintervall zu den Charakteristika der Daten betreffend die Stellung des Stellgliedes aus dem betrachteten Zeitintervall gehört, dass der Stellung des Stellgliedes mindestens ein lokales Maximum zugewiesen werden kann, sowie Mittel zum Vergleichen von Charakteristika von Daten aus Zeitintervallen, wobei diese Mittel so konfiguriert sind, dass sie die gleichen Charakteristika der Daten aus dem vor-genannten ersten und dem vorgenannten zweiten Zeitintervall miteinander vergleichen können, ferner Mittel zum Erstellen und Ausgeben einer Diagnose; wobei diese Mittel eine Diagnose erstellen und ausgeben können, wenn die vorgenannten Mittel zum Bestimmen und Vergleichen von Charakteristika von Daten Unterschiede in den Charakteristika der Daten aus dem ersten und zweiten Zeitintervall feststellen. Dabei ist das Stellventil zum Ausführen eines Verfahrens, wie es bereits beschrieben wurde, konfiguriert.

Besonders einfach und sicher (z.B. im Hinblick auf Netzwerksicherheit) gestaltet sich das Stellventil, wenn ein Steuermodul vorhanden ist, wobei die Mittel zum Erfassen von Daten, zum Bestimmen von Zeitintervallen, zum Bestimmen und Vergleichen von Charakteristika von Daten, und zum Erstellen und Ausgeben einer Diagnose durch das Steuermodul bereitgestellt werden.

Eine zentralisierte Überwachung, und vergleichsweise geringer Aufwand bei ggf. erforderlichen aufwendigen Berechnungen und/oder Analysen der Daten wird erreicht, wenn das Stellventil ein Steuermodul hat, wobei die Mittel zum Erfassen von Daten, zum Bestimmen von Zeitintervallen, zum Bestimmen und Vergleichen von Charakteristika von Daten, und zum Erstellen und Ausgeben einer Diagnose durch mindestens ein Gerät bereitgestellt werden, welches über ein Netzwerk mit dem Steuermodul verbunden ist. Bei dem mindestens einen Gerät kann es sich z.B. um Computer in einer Cloud handeln.

Ferner wird die Aufgabe gelöst durch ein Computerprogramm, welches ausführbare Instruktionen beinhaltet, welche bei Ausführung auf einer Recheneinheit, einem Mikrocontroller, DSP, FPGA oder Computer oder auf einer Mehrzahl davon in einem Netzwerk das Verfahren nach einem der vorhergehenden Verfahrensansprüche ausführt.

Weiterhin wird die Aufgabe gelöst durch ein Computerprogramm mit Programmcode-Mitteln, um das erfindungsgemäße Verfahren in einer seiner Ausgestaltungen durchzuführen, wenn das Programm auf einer Recheneinheit, einem Mikrocontroller, DSP, FPGA oder Computer oder auf einer Mehrzahl davon in einem Netzwerk ausgeführt wird. Insbesondere können die Programmcode-Mittel auf einem computerlesbaren Datenträger gespeicherte Instruktionen sein.

Außerdem wird die Aufgabe gelöst durch einen Datenträger, auf dem eine Datenstruktur gespeichert ist, die nach einem Laden in einen Arbeits- und/oder Hauptspeicher einer Recheneinheit, eines Mikrocontrollers, DSPs, FPGAs oder Computers oder einer Mehrzahl davon in einem Netzwerk das erfindungsgemäße Verfahren in einer seiner Ausgestaltungen ausführen kann.

Auch wird die Aufgabe gelöst durch ein Computerprogramm-Produkt mit auf einem maschinenlesbaren Träger gespeicherten Programmcode-Mitteln, um das erfindungsgemäße Verfahren in einer seiner Ausgestaltungen durchzuführen, wenn das Programm auf einer Recheneinheit, einem Mikrocontroller, DSP, FPGA oder Computer oder auf einer Mehrzahl davon in einem Netzwerk ausgeführt wird. Dabei wird unter einem Computer-Programmprodukt das Programm als handelbares Produkt verstanden. Es kann grundsätzlich in beliebiger Form vorliegen, so zum Beispiel auf Papier oder einem computerlesbaren Datenträger und kann insbesondere über ein Datenübertragungsnetz verteilt werden.

Schließlich wird die Aufgabe gelöst durch ein moduliertes Datensignal, welches von einer Recheneinheit, einem Mikrocontroller, DSP, FPGA oder Computer oder von einer Mehrzahl davon in einem Netzwerk ausführbare Instruktionen zum Ausführen des erfindungsgemäßen Verfahrens in einer seiner Ausgestaltungen enthält.

Als Computersystem zum Ausführen des Verfahrens kommen sowohl ein einzelner Computer oder Mikrocontroller, DSPs oder FPGAs in Betracht, als auch ein Netzwerk von Mikrocontrollern, DSPs, FPGAs oder Rechnern, beispielsweise ein hausinternes, geschlossenes Netz, oder auch Rechner, die über das Internet miteinander verbunden sind. Ferner kann das Computersystem durch eine Client-Server-Konstellation realisiert sein, wobei Teile der Erfindung auf dem Server, andere auf einem Client ablaufen.

Außerdem wird die Aufgabe durch ein Steuermodul für ein Stellventil gelöst, welches Mittel zum Ausführen des beschriebenen Verfahrens bereitstellt. Mit einem solchen Steuermodul lassen sich bereits existierende Stellventile in erfindungsgemäßer Weise nachrüsten.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1A: den typischen Aufbau eines Stellventils in geöffneter Stellung;
- Fig. 1B: den typischen Aufbau eines Stellventils in geschlossener Stellung;
- Fig. 2A: ein typisches Histogramm der Ventilstellung, bei dem das Stellventil anhand des Arbeitsbereichs als überdimensioniert erkannt werden kann;
- Fig. 2B: ein Histogramm der Ventilstellung, bei dem der Arbeitsbereich gegenüber Fig. 2A zum weiter geöffneten Zustand hin verschoben ist.;
- Fig. 3A: ein weiteres typisches Histogramm einer Ventilstellung; und
- Fig. 3B: ein Histogramm der Ventilstellung, bei dem der Arbeitsbereich gegenüber Fig. 3A stark zum stärker geschlossenen Zustand hin verschoben ist.

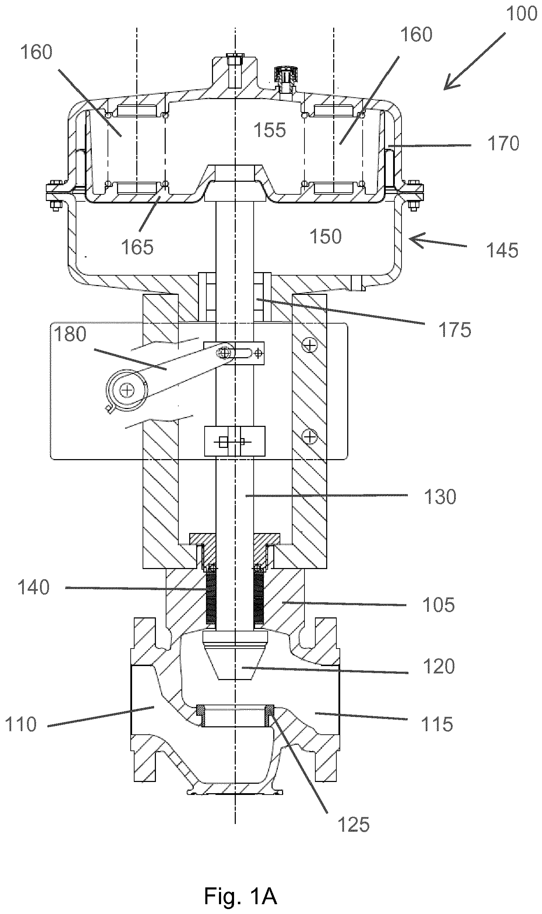

Fig. 1A zeigt einen typischen Aufbau eines Stellventils 100 mit einem Ventilgehäuse 105. Zwischen der Zuströmseite 110 und der Abströmseite 115 befindet sich ein Ventilglied 120, das zum Drosseln der Strömung eines von der Zuströmseite 110 zur Abströmseite 115 fließenden Prozessfluids in den Ventilsitz 125 gepresst werden kann. Dazu dient die Ventilstange bzw. Antriebsstange 130. Die Durchführung der Ventilstange 130 durch das fluiddichte Ventilgehäuse 105 ist durch eine Dichtung bzw. Stopfbuchse 140 abgedichtet.

Am oberen Ende der Ventilstange 130 befindet sich ein fluidischer Antrieb 145, wobei das Antriebsfluid typischerweise Gas ist. Der Antrieb 145 weist zwei Kammern auf, eine untere Druckluftkammer 150 und eine obere Kammer 155, in der Federn 160 über eine Platte 165 auf die Ventilstange 130 einwirken. Die beiden Kammern 150 und 155 sind durch eine Membran 170 voneinander getrennt, wobei die Membran 170 undurchlässig ist gegenüber dem Antriebsfluid, typischerweise Druckluft. Ein solcher Aufbau wird als einfachwirkender Pneumatikantriebe bezeichnet, da nur in eine Kammer, die Druckluftkammer 150, Druckluft eingeführt wird und nicht in beide. Die Durchführung der Ventilstange 130 durch das Gehäuse des Antriebs 145 muss dicht sein gegenüber dem Antriebsfluid. Zu diesem Zweck ist diese Durchführung durch eine Antriebsgehäuse-Abdichtung 175 abgedichtet.

Typischerweise befindet sich an der Ventilstange 130 noch ein Signalnehmer bzw. Stellungssensor 180 zum Bestimmen der Position des Ventilglieds 120.

In Fig. 1A befindet sich ausreichend Druckluft in der Druckluftkammer 150, so dass das Stellventil 100 geöffnet ist.

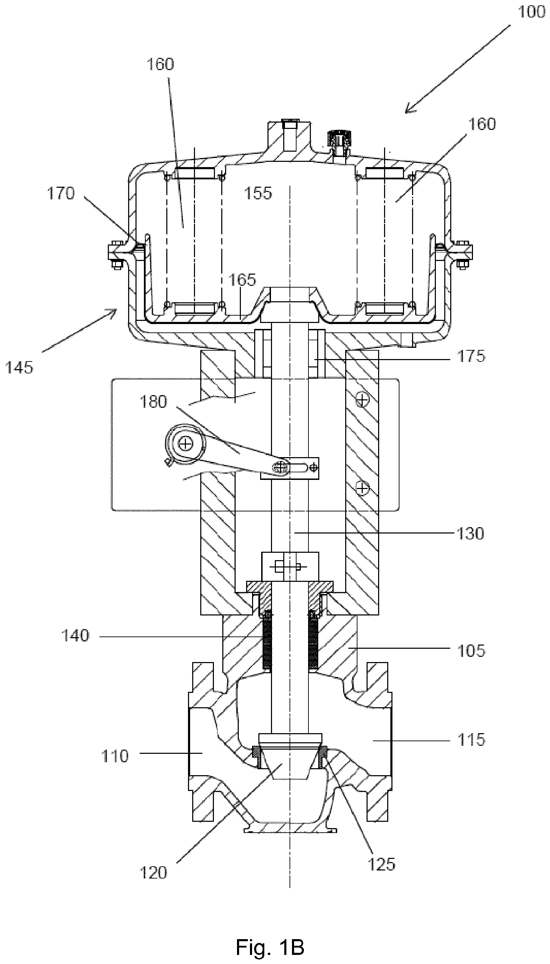

In Fig. 1B ist die Druckluftkammer 150 entlüftet, so dass die Federn 160 das Stellventil 160 schließen konnten.

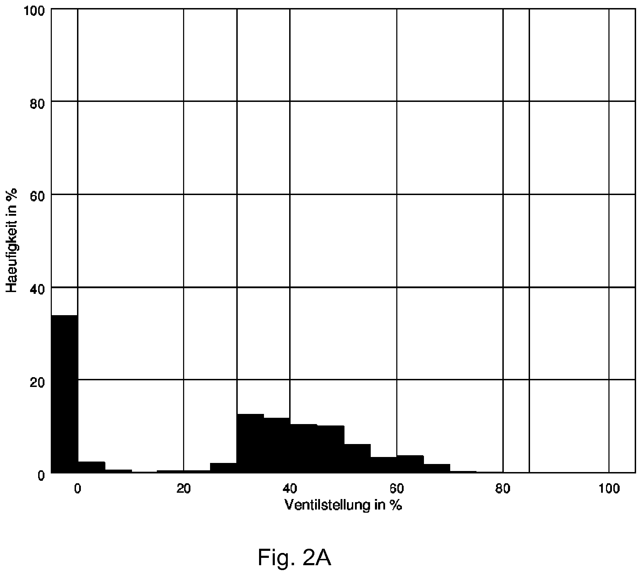

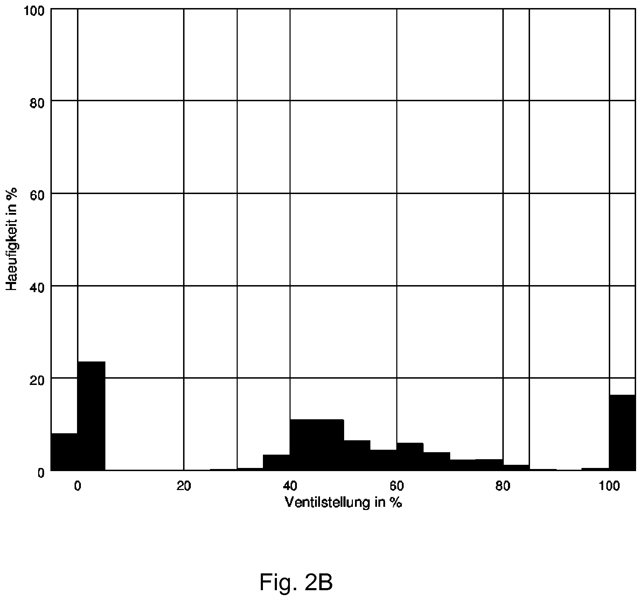

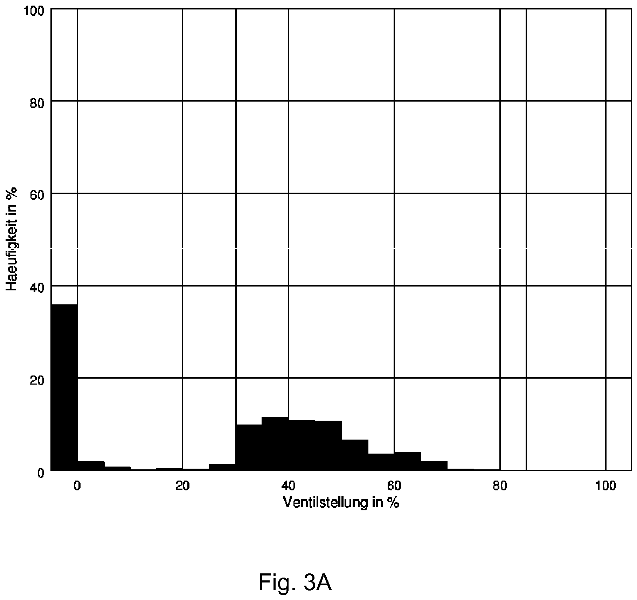

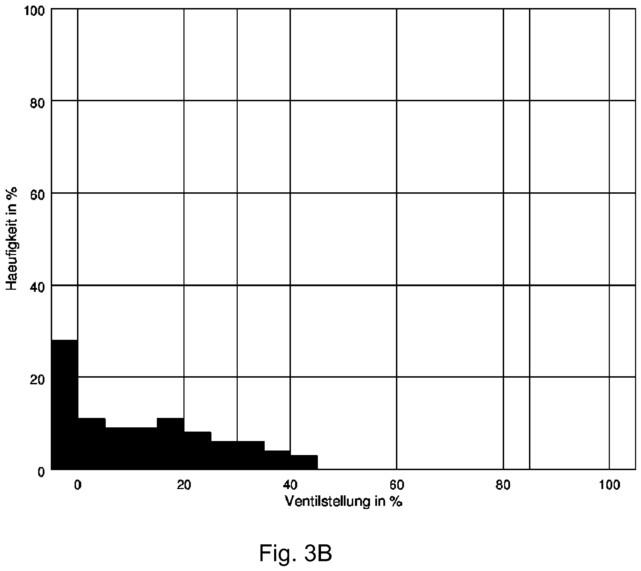

Die Bestimmung des Arbeitspunkts bzw. Arbeitsbereichs beruht vorzugsweise auf der Auswertung des Histogramms der Ventilstellung. Das Histogramm wird auf Häufungen analysiert. Typische Histogramme dieser Art sind in den Figuren 2A, 2B, 3A und 3B zu sehen. Zur Auswertung werden zweckmäßigerweise die Randbereiche (also diejenigen Daten, die 0% bzw. 100% entsprechen, da das Ventil dann völlig geschlossen oder offen ist) abgeschnitten.

Um den Arbeitsbereich zu erhalten, wird vorzugsweise von der höchsten Säule (mit Ausnahme von 0% und 100%) des Histogramms ausgegangen, also vom lokalen Maximum der Häufigkeit. Anschließend werden ggf. solange Nachbar-Säulen hinzugefügt, bis ein gewisser Prozentsatz der Gesamthäufigkeit erreicht ist, z.B. 50%. Dann bewegt sich das Ventil mindestens 50% der Zeit in diesem Bereich. Beim typischen Vorgehen wird immer die angrenzende Säule des Histogramms dem Arbeitsbereich hinzugefügt, die die jeweils höhere Häufigkeit aufweist.

Es sind natürlich auch andere Vorgehensweisen denkbar, z.B. können bis zum Erreichen der gewünschten Häufigkeit jeweils beide benachbarten Säulen hinzugefügt werden. Oder es wird der Mittelwert +/- eine oder mehrere Standardabweichungen als Arbeitsbereich definiert.

Anhand der Histogramme lassen sich verschiedene Veränderungen des Arbeitsbereichs feststellen, die zu verschiedenen Diagnosen führen können.

In Fig. 2A ist z.B. deutlich zu erkennen, dass der Arbeitsbereich eher um 40% herum liegt als im optimalen Bereich von 60-70%. Dies erlaubt die Schlussfolgerung, dass das Stellventil für den Prozess, der dort abläuft, überdimensioniert ist, da es im Normalfall nicht so weit öffnet, wie sinnvoll wäre, um maximale Effektivität beim Betrieb des Ventils zu erreichen.

Bei der weiteren Auswertung ist es sinnvoll, zwischen kurzfristigen und langfristigen Änderung zu unterscheiden. Langfristige Änderungen können sich hierbei über mehrere Monate, Jahre oder sogar über die gesamte Lebenszeit der Anlage bzw. des Ventils erstrecken. Kurzfristige Änderungen können dagegen im Bereich von Stunden, einigen Tagen bis maximal Wochen liegen. Je nachdem, ob die Änderungen kurz- oder langfristig erfolgen, kann davon ausgegangen werden, dass sie auf Prozessänderungen, oder z.B. Änderungen in der Zusammensetzung des zu regelnden Fluids zurückgehen (kurzfristig), oder z.B. auf Verschleißerscheinungen am Ventil (langfristig).

Beim Übergang von Fig. 2A zu Fig. 2B ist zu erkennen, dass der Arbeitsbereich in Fig. 2B zum weiter geöffneten Zustand hin verschoben ist. Handelt es sich um einen langfristig auftretenden Effekt, wären hier z.B. Ablagerungen am Ventilsitz oder Ventilkegel zu diagnostizieren.

Tritt der Effekt hingegen kurzfristig auf, und ggf. auch bei weiteren, im Prozessverlauf dahinter liegenden Ventilen ebenfalls, könnte eine möglicherweise defekte Pumpe (die weniger als vorgesehen fördert) im Vorlaufbereich des Ventils diagnostiziert werden.

Beim Übergang von Fig. 3A zu Fig. 3B ist zu erkennen, dass der Arbeitsbereich stark zum stärker geschlossenen Zustand hin verschoben ist. Handelt es sich hierbei um einen langfristigen Effekt, könnte Abnutzung des Ventilsitzes oder Ventilkegels diagnostiziert werden.

Aufgrund der Stärke der Verschiebung ist allerdings davon auszugehen, dass auch ggf. Prozessveränderungen hier mit eine Rolle spielen. Bei einer kurzfristigen Änderung dieser Art wäre das auch die zu erstellende Diagnose.

Weiterhin sind Veränderungen in der Breite des Arbeitsbereichs von Relevanz. Verbreitert sich der Arbeitsbereich, ist eine Verringerung der Prozessstabilität festzustellen. Wird der Arbeitsbereich hingegen schmaler, so läuft der Prozess offenbar stabiler.

Mit diesen Regeln lässt sich allein mit der Kenntnis der Ruhepositionen des Stellventils eine Diagnose für Probleme erreichen, die auftreten können und Veränderungen am Stellventil bewirken. Aufgrund dieser Diagnosen kann z.B. mit Wartungsmaßnahmen eingegriffen werden, bevor es zu Schäden oder Ausfällen an der Anlage kommt. Und für diese Diagnosen bedarf es keiner zusätzlichen Sensoren.

### Glossar

### Arbeitsbereich

Damit wird ein Bereich bzw. Intervall bezeichnet, der den Arbeitspunkt beinhaltet. Dies ist immer dann sinnvoll, wenn sich ein Arbeitspunkt nicht genau bestimmen lässt, weil z.B. die Positionsauflösung der zur Verfügung stehenden Daten zu gering ist oder der Zustand, der erfasst wird, zu stark schwankt. Ein solcher Arbeitsbereich kann z.B. durch die Forderung definiert werden, dass 50% der Werte umfasst sein müssen.

### Arbeitspunkt

Der Arbeitspunkt, auch Betriebspunkt oder -zustand genannt, ist ein bestimmter Punkt im Kennfeld oder auf der Kennlinie eines technischen Gerätes, der aufgrund der Systemeigenschaften und einwirkenden äußeren Einflüsse und Parameter eingenommen wird (nach https://de.wikipedia.org/wiki/Arbeitspunkt). Bei einem Stellventil ist dies der bei normalem Betrieb vorgesehene Öffnungszustand. Stellventile sind typischerweise so ausgelegt, dass der Arbeitspunkt im Optimum bei 70% Öffnung liegt.

### Prozessventil, Stellventil

Prozessventile, auch Stell- oder Regelventile genannt, dienen zur Drosselung bzw. Regelung fluidischer Ströme. In einer Durchflussöffnung eines Ventilsitzes wird zu diesem Zweck ein Drosselkörper bzw. Ventilglied mittels eines Antriebs bewegt.

### Bezugszeichen

- 100: Stell- bzw. Prozessventil
- 105: Ventilgehäuse
- 110: Zuströmseite
- 115: Abströmseite
- 120: Ventilglied
- 125: Ventilsitz
- 130: Ventilstange bzw. Antriebsstange
- 140: Stopfbuchse bzw. Dichtung
- 145: fluidischer Antrieb
- 150: Druckluftkammer
- 155: obere Kammer
- 160: Feder
- 165: Platte
- 170: Membran
- 175: Antriebsgehäuse-Abdichtung
- 180: Signalnehmer

### zitierte Literatur

### zitierte Patentliteratur

EP 315 391 B1
EP 2 884 358 B1
DE 197 23 650 A1
WO 2013/184863 A1

## Patentansprüche

1. Verfahren zur Diagnose von möglichen Ursachen für Veränderungen an mindestens einem Stellventil (100) mit einem Stellglied (120), an einer Anlage, deren Teil das Stellventil (100) ist, oder an einem Prozess, der auf der Anlage durchgeführt wird, mit folgenden Schritten:
1.1 wenn keine Bewegung des Stellgliedes (120) vorgesehen ist und/oder kein Steuerimpuls vorliegt, werden zu einer Mehrzahl von Zeitpunkten Daten betreffend die Stellung des Stellglieds (120) erfasst;
1.2 dies geschieht zumindest in einem ersten und in einem zweiten Zeitintervall;
1.3 Charakteristika der Daten betreffend die Stellung des Stellgliedes (120) aus dem ersten Zeitintervall werden ermittelt;
1.3.1 wobei die Charakteristika aus einer Gruppe ausgewählt werden, die zumindest die folgenden Mitglieder umfasst: den Arbeitspunkt, einen Mittelwert, dessen Varianz, einen Arbeitsbereich, lokale Maxima;
1.4 die gleichen Charakteristika werden für die Daten betreffend die Stellung des Stellgliedes (120) aus dem zweiten Zeitintervall ermittelt;
1.4.1 wobei die weiteren Schritte nur durchgeführt werden, wenn für jedes betrachtete Zeitintervall zu den Charakteristika der Daten betreffend die Stellung des Stellgliedes (120) aus dem betrachteten Zeitintervall gehört, dass der Stellung des Stellgliedes mindestens ein lokales Maximum zugewiesen werden kann;
1.5 die Charakteristika der Daten betreffend die Stellung des Stellgliedes (120) aus den beiden Zeitintervallen werden verglichen;
1.6 aus festgestellten Unterschieden in den Charakteristika werden mögliche Ursachen für Veränderungen an dem mindestens einen Stellventil (100), an der Anlage oder an dem Prozess diagnostiziert;
1.7 die Diagnose wird ausgegeben.

2. Verfahren nach dem vorhergehenden Anspruch,
**dadurch gekennzeichnet,**
**dass** die Daten betreffend die Stellung des Stellglieds (120) aussortiert und nicht erfasst werden, wenn die zugehörige Position des Stellgliedes 0% oder 100% entspricht.

3. Verfahren nach einem der vorhergehenden Ansprüche,
**dadurch gekennzeichnet,**
**dass** für jedes betrachtete Zeitintervall aus den Charakteristika der Daten ein Arbeitspunkt
und/oder ein Arbeitsbereich des Stellventils (100) bestimmt werden.

4. Verfahren nach dem vorhergehenden Anspruch,
**dadurch gekennzeichnet,**
**dass** eine falsche Auslegung der Größe des Stellventils (100) diagnostiziert wird, wenn der Arbeitspunkt nicht einer Ventilstellung zwischen 50% und 70% entspricht.

5. Verfahren nach einem der vorhergehenden Ansprüche,
**dadurch gekennzeichnet,**
**dass** eine Änderung am Prozess oder eine Veränderung des von dem Ventil (100) gesteuerten
Fluids diagnostiziert wird, wenn Unterschiede in den Charakteristika der Daten zweier Zeitintervalle festgestellt werden, wobei die Zeitintervalle um nicht mehr als 2 Wochen auseinanderliegen.

6. Verfahren nach einem der vorhergehenden Ansprüche,
**dadurch gekennzeichnet,**
**dass** Verschleiß oder ein Defekt an dem Ventil (100) diagnostiziert wird, wenn Unterschiede in
den Charakteristika der Daten zweier Zeitintervalle nur festgestellt werden, wenn die Zeitintervalle um mehr als 3 Wochen auseinanderliegen.

7. Verfahren nach dem vorhergehenden Anspruch,
**dadurch gekennzeichnet,**
**dass** Ablagerungen auf dem Ventilsitz (125) oder Ventilkegel (120) diagnostiziert werden, wenn
ein Unterschied dahingehend festgestellt wird, dass der Arbeitspunkt und/oder Arbeitsbereich zu einer weiter geöffneten Ventilstellung hin verschoben ist.

8. Verfahren nach einem der vorhergehenden Ansprüche,
**dadurch gekennzeichnet,**
**dass** Abnutzung oder Verschleiß des Ventilsitzes (125) und/oder Ventilkegels (120) diagnostiziert werden, wenn ein Unterschied dahingehend festgestellt wird, dass der Arbeitspunkt und/oder Arbeitsbereich zu einer stärker geschlossenen Ventilstellung hin verschoben ist.

9. Verfahren nach Anspruch 3, wobei ein Arbeitsbereich mit einer Breite bestimmt wird,
**dadurch gekennzeichnet,**
**dass** aus einer Zunahme der Breite des Arbeitsbereichs eine Abnahme der Stabilität des Prozesses diagnostiziert wird, und/oder
**dass** aus einer Abnahme der Breite des Arbeitsbereichs eine Zunahme der Stabilität des Prozesses diagnostiziert wird.

10. Verfahren nach Anspruch 3, wobei eine Diagnose von möglichen Ursachen für Veränderungen an einer Anlage oder einem Prozess mit einer Mehrzahl von Ventilen vorgesehen ist,
**dadurch gekennzeichnet,**
**dass** ein Defekt an einer Pumpe diagnostiziert wird, wenn ein Unterschied dahingehend festgestellt wird, dass bei einer Mehrzahl von Ventilen, die mit der Pumpe in Wechselwirkung stehen, der Arbeitspunkt und/oder Arbeitsbereich zu einer weiter geöffneten Ventilstellung hin verschoben ist.

11. Verfahren nach Anspruch 3,
**dadurch gekennzeichnet,**
**dass** zum Bestimmen des Arbeitsbereichs des Stellventils (100) im betrachteten Zeitintervall
folgende Schritte ausgeführt werden:
11.1 aus den Daten betreffend die Stellung des Stellglieds (120) wird ein Histogramm gebildet;
11.2 das lokale Maximum der Häufigkeiten der Stellung des Stellglieds (120) in diesem Histogramm wird bestimmt und dem Arbeitsbereich zugewiesen;
11.3 solange die dem Arbeitsbereich zugewiesene Häufigkeit weniger als 50% der Gesamthäufigkeit beträgt, wird die dem Arbeitsbereich im Histogramm jeweils direkt benachbarte Stellung des Stellglieds (120) mit der größten Häufigkeit dem Arbeitsbereich hinzugefügt.

12. Stellventil (100), mit:
12.1 Mitteln zum Erfassen von Daten zur Stellung des Stellglieds (120) und des zugehörigen Zeitpunktes, wobei diese Mittel so konfiguriert sind, dass sie Daten zur Stellung des Stellglieds (120) und den jeweils zugehörigen Zeitpunkt erfassen können, wenn keine Bewegung des Stellgliedes (120) vorgesehen ist und/oder kein Steuerimpuls vorliegt;
12.2 Mitteln zum Bestimmen von Zeitintervallen, wobei diese Mittel zumindest ein erstes und ein zweites Zeitintervall bestimmen können;
12.3 wobei Daten zur Stellung des Stellglieds (120) und der jeweils zugehörige Zeitpunkt in den zumindest ersten und zweiten Zeitintervallen erfasst werden; und mit
12.4 Mitteln zum Bestimmen von Charakteristika von Daten aus Zeitintervallen, wobei diese Mittel so konfiguriert sind, dass sie die gleichen Charakteristika der Daten aus dem vorgenannten ersten und dem vorgenannten zweiten Zeitintervall bestimmen können;
12.4.1 wobei die Charakteristika aus einer Gruppe ausgewählt werden, die zumindest die folgenden Mitglieder umfasst: den Arbeitspunkt, einen Mittelwert, dessen Varianz, einen Arbeitsbereich, lokale Maxima;
12.5 Mitteln zum Feststellen, ob für jedes betrachtete Zeitintervall zu den Charakteristika der Daten betreffend die Stellung des Stellgliedes (120) aus dem betrachteten Zeitintervall gehört, dass der Stellung des Stellgliedes mindestens ein lokales Maximum zugewiesen werden kann;
12.6 Mitteln zum Vergleichen von Charakteristika von Daten aus Zeitintervallen, wobei diese Mittel so konfiguriert sind, dass sie die gleichen Charakteristika der Daten aus dem vorgenannten ersten und dem vorgenannten zweiten Zeitintervall miteinander vergleichen können; und
12.7 Mitteln zum Erstellen und Ausgeben einer Diagnose; wobei diese Mittel eine Diagnose erstellen und ausgeben können, wenn die vorgenannten Mittel zum Bestimmen und Vergleichen von Charakteristika von Daten Unterschiede in den Charakteristika der Daten aus dem ersten und zweiten Zeitintervall feststellen;
12.8 wobei das Stellventil (100) zum Ausführen eines Verfahrens nach einem der vorhergehenden Verfahrensansprüche konfiguriert ist.

13. Computerprogramm,
**dadurch gekennzeichnet,**
**dass** das Computerprogramm
ausführbare Instruktionen beinhaltet, welche bei Ausführung auf einer Recheneinheit, einem Mikrocontroller, DSP, FPGA oder Computer oder auf einer Mehrzahl davon in einem Netzwerk das Verfahren nach einem der Verfahrensansprüche ausführt.

14. Datenträger, auf dem eine Datenstruktur gespeichert ist, die nach einem Laden in einen Arbeits- und/oder Hauptspeicher einer Recheneinheit, eines Mikrocontrollers, DSPs, FPGAs oder Computers oder einer Mehrzahl davon in einem Netzwerk das Verfahren nach einem der Verfahrensansprüche ausführt.

15. Steuermodul für ein Stellventil (100),
**dadurch gekennzeichnet,**
**dass** das Steuermodul Mittel zum Ausführen des Verfahrens nach einem der Verfahrensansprüche bereitstellt.

## Claims

1. A method for diagnosing possible causes of changes in at least one control valve (100) with a control element (120), in a plant of which the control valve (100) is a part, or in a process performed on the plant, comprising the following steps:
1.1 when no movement of the control element (120) is intended and/or there is no control impulse, data concerning the position of the control element (120) are recorded at a plurality of times
1.2 this occurs at least in a first and in a second time interval;
1.3 characteristics of the data relating to the position of the control element (120) from the first time interval are determined;
1.3.1 wherein the characteristics are chosen from a group comprising at least the following members: the operating point, a mean value, the variance thereof, an operating range, local maxima;
1.4 the same characteristics are determined for the data relating to the position of the control element (120) from the second time interval;
1.4.1 wherein the further steps are only performed if for each time interval considered the characteristics of the data relating to the position of the control element (120) from the time interval considered include that at least one local maximum can be assigned to the position of the control element;
1.5 the characteristics of the data relating to the position of the control element (120) from the two time intervals are compared;
1.6 possible causes for changes in the at least one control valve (100), in the plant or in the process are diagnosed from differences determined in the characteristics;
1.7 the diagnosis is output.

2. The method according to the preceding claim,
**characterized in that**
the data concerning the position of the control element (120) is rejected and not recorded if the
corresponding position of the control element corresponds to 0% or 100%.

3. The method according to one of the preceding claims,
**characterized in that**
for each time interval considered, an operating point and/or an operating range of the control
valve (100) is determined from the characteristics of the data.

4. The method according to the preceding claim,
**characterized in that**
an incorrect sizing of the control valve (100) size is diagnosed if the operating point does not
correspond to a valve position between 50% and 70%.

5. The method according to one of the preceding claims,
**characterized in that**
a change in the process or a change in the fluid controlled by the valve (100) is diagnosed if
differences in the characteristics of the data between two time intervals are determined, wherein the time intervals are not more than 2 weeks apart.

6. The method according to one of the preceding claims,
**characterized in that**
wear or a defect in the valve (100) is diagnosed if differences in the characteristics of the data of
two time intervals are determined only if the time intervals are more than 3 weeks apart.

7. The method according to the preceding claim,
**characterized in that**
deposits on the valve seat (125) or valve cone (120) are diagnosed if a difference is determined
**in that** the operating point and/or operating range is shifted towards a more open valve position.

8. The method according to one of the preceding claims,
**characterized in that**
that wear or abrasion of the valve seat (125) and/or valve cone (120) is diagnosed if a difference is determined **in that** the operating point and/or operating range is shifted towards a more closed valve position.

9. The method according to claim 3, wherein an operating range with a width is determined,
**characterized in that**
from an increase in the width of the operating range, a decrease in the stability of the process is diagnosed, and/or
from a decrease in the width of the opreating range, an increase in the stability of the process is diagnosed.

10. The method according claim 3, providing a diagnosis of possible causes of changes in a
plant or process having a plurality of valves,
**characterized in that**
a defect in a pump is diagnosed if a difference is determined **in that**, for a plurality of valves interacting with the pump, the operating point and/or operating range is shifted to a more open valve position.

11. The method according to claim 3,
**characterized in that**
the following steps are performed to determine the operating range of the control valve (100) in
the considered time interval:
11.1 a histogram is formed from the data concerning the position of the control element (120);
11.2 the local maximum of the frequencies of the position of the control element (120) in this histogram is determined and assigned to the operating range;
11.3 as long as the frequency assigned to the operating range is less than 50% of the total frequency, the position of the control element (120) with the highest frequency directly adjacent to the operating range in the histogram is added to the operating range.

12. A control valve (100), having:
12.1 means for acquiring data on the position of the control element (120) and the associated time, said means being configured to acquire data on the position of the control element (120) and the associated time when no movement of the control element (120) is intended and/or there is no control impulse;
12.2 means for determining time intervals, said means being able to determine at least a first and a second time interval;
12.3 wherein data on the position of the control element (120) and the respective associated time are acquired in the at least first and second time intervals; and with
12.4 means for determining characteristics of data from time intervals, said means being configured to determine the same characteristics of data from said first and second time intervals;
12.4.1 wherein the characteristics are chosen from a group comprising at least the following members: the operating point, a mean value, the variance thereof, an operating range, local maxima;
12.5 means for determining for each time interval considered whether the characteristics of the data relating to the position of the control element (120) from that time interval include that at least one local maximum can be assigned to the position of the control element,
12.6 means for comparing characteristics of data from time intervals, said means being configured to compare the same characteristics of data from said first and second time intervals; and
12.7 means for establishing and issuing a diagnosis; said means being capable of establishing and issuing a diagnosis if said means for determining and comparing characteristics of data detect differences in the characteristics of the data from the first and second time intervals;
12.8 wherein the control valve (100) is configured to perform a method according to one of the preceding method claims.

13. A computer program,
**characterized in that**
the computer program contains executable instructions which, when executed on a computing
unit, a microcontroller, DSP, FPGA or computer or on a plurality thereof in a network, performs the method according to one of the method claims

14. A data carrier, whereon a data structure is stored which, after being loaded into a working
and/or main memory of a computing unit, a microcontroller, DSP, FPGA or computer or a
plurality thereof in a network, performs the method according to one of the method claims

15. A control module for a control valve (100),
**characterized in that**
the control module provides means to perform the method according to one of the method
claims.

## Revendications

1. Procédé de diagnostic des causes possibles de modifications d'au moins une soupape de positionnement (100) avec un actionneur (120), d'une installation dont la soupape de positionnement (100) fait partie, ou d'un processus qui est exécuté sur l'installation, comprenant les étapes suivantes :
1.1 lorsqu'aucun mouvement de l'actionneur (120) n'est prévu et/ou qu'aucune impulsion de commande n'est présente, des données concernant la position de l'actionneur (120) sont enregistrées à une pluralité d'instants ;
1.2 cela se produit au moins dans un premier et dans un deuxième intervalle de temps ;
1.3 on détermine les caractéristiques des données concernant la position de l'actionneur (120) du premier intervalle de temps ;
1.3.1 dans lequel les caractéristiques sont choisies dans un groupe comprenant au moins les membres suivants : le point de fonctionnement, une valeur moyenne, sa variance, une plage de fonctionnement, des maxima locaux ;
1.4 les mêmes caractéristiques sont déterminées pour les données concernant la position de l'actionneur (120) à partir du deuxième intervalle de temps ;
1.4.1 dans lequel les étapes suivantes ne sont effectuées que si, pour chaque intervalle de temps considéré, les caractéristiques des données concernant la position de l'actionneur (120) à partir de l'intervalle de temps considéré comprennent le fait qu'au moins un maximum local peut être attribué à la position de l'actionneur ;
1.5 les caractéristiques des données relatives à la position de l'actionneur (120) dans les deux intervalles de temps sont comparées ;
1.6 à partir des différences constatées dans les caractéristiques, on diagnostique les causes possibles de modifications de l'au moins une soupape de positionnement (100), de l'installation ou du processus ;
1.7 le diagnostic est émis.

2. Procédé selon la revendication précédente,
**caractérisé**
**en ce que** les données relatives à la position de l'actionneur (120) sont triées et non
enregistrées si la position associée de l'actionneur est égale à 0% ou 100%.

3. Procédé selon l'une quelconque des revendications précédentes,
**caractérisé**
**en ce que**, pour chaque intervalle de temps considéré, on détermine à partir des
caractéristiques des données un point de fonctionnement et/ou une plage de fonctionnement de la soupape de positionnement (100).

4. Procédé selon la revendication précédente,
**caractérisé**
**en ce qu'**un mauvais dimensionnement de la taille de la soupape de positionnement (100) est
diagnostiqué lorsque le point de fonctionnement ne correspond pas à une position de la soupape comprise entre 50% et 70%.

5. Procédé selon l'une des revendications précédentes,
**caractérisé**
**en ce qu'**une modification du processus ou une modification du fluide commandé par la
soupape (100) est diagnostiquée lorsque des différences dans les caractéristiques des données de deux intervalles de temps sont détectées, dans lequel les intervalles de temps ne sont pas séparés de plus de deux semaines.

6. Procédé selon l'une quelconque des revendications précédentes,
**caractérisé**
**en ce que** l'usure ou un défaut de la soupape (100) est diagnostiqué lorsque des différences
dans les caractéristiques des données de deux intervalles de temps sont détectées uniquement lorsque les intervalles de temps sont séparés de plus de 3 semaines.

7. Procédé selon la revendication précédente,
**caractérisé**
**en ce que** des dépôts sur le siège de soupape (125) ou le cône de soupape (120) sont
diagnostiqués lorsqu'une différence est détectée **en ce que** le point de fonctionnement et/ou la plage de fonctionnement est déplacée vers une position de soupape plus ouverte.

8. Procédé selon l'une des revendications précédentes,
**caractérisé**
**en ce que** l'usure du siège de soupape (125) et/ou du cône de soupape (120) est diagnostiquée
lorsqu'une différence est détectée entre le point de fonctionnement et/ou la plage de fonctionnement déplacés vers une position de soupape plus fermée.

9. Procédé selon la revendication 3, dans lequel une plage de fonctionnement ayant une
largeur est déterminée,
**caractérisé**
**en ce qu'**une diminution de la stabilité du processus est diagnostiquée à partir d'une augmentation de la largeur de la plage de fonctionnement, et/ou
une augmentation de la stabilité du processus est diagnostiquée à partir d'une diminution de la largeur de la plage de fonctionnement.

10. Procédé selon la revendication 3, dans lequel il est prévu un diagnostic des causes possibles de changements dans une installation ou un processus comportant une pluralité de soupapes,
**caractérisé**
**en ce que** un défaut d'une pompe est diagnostiqué lorsqu'une différence est détectée dans le
fait que le point de fonctionnement et/ou la plage de fonctionnement d'une pluralité de soupapes interagissant avec la pompe est déplacée vers une position de soupape plus ouverte.

11. Procédé selon la revendication 3,
**caractérisé**
**en ce que**, pour déterminer la plage de fonctionnement de la soupape de positionnement (100)
dans l'intervalle de temps considéré, on effectue les étapes suivantes :
11.1 on forme un histogramme à partir des données relatives à la position de l'actionneur (120)
11.2 le maximum local des fréquences de la position de l'actionneur (120) dans cet histogramme est déterminé et attribué à la plage de fonctionnement ;
11.3 tant que la fréquence attribuée à la plage de fonctionnement est inférieure à 50% de la fréquence totale, la position de l'actionneur (120) directement adjacente à la plage de fonctionnement dans l'histogramme et présentant la fréquence la plus élevée est ajoutée à la plage de fonctionnement.

12. Soupape de positionnement (100), comprenant :
12.1 des moyens d'acquisition de données relatives à la position de l'actionneur (120) et à l'instant correspondant, dans lesquels ces moyens sont configurés de manière à pouvoir acquérir des données relatives à la position de l'actionneur (120) et à l'instant respectivement correspondant lorsqu'aucun mouvement de l'actionneur (120) n'est prévu et/ou qu'aucune impulsion de commande n'est présente ;
12.2 des moyens pour déterminer des intervalles de temps, dans lesquels ces moyens peuvent déterminer au moins un premier et un deuxième intervalle de temps ;
12.3 dans lequel des données concernant la position de l'actionneur (120) et l'instant respectif correspondant sont saisies dans les au moins premier et deuxième intervalles de temps ; et avec
12.4 des moyens pour déterminer des caractéristiques de données provenant d'intervalles de temps, dans lesquels ces moyens sont configurés pour déterminer les mêmes caractéristiques des données provenant du premier et du deuxième intervalles de temps susmentionnés ;
12.4.1 dans lequel les caractéristiques sont choisies dans un groupe comprenant au moins les membres suivants : le point de fonctionnement, une valeur moyenne, sa variance, une plage de fonctionnement, des maxima locaux ;
12.5 des moyens pour déterminer si, pour chaque intervalle de temps considéré, les caractéristiques des données relatives à la position de l'actionneur (120) de l'intervalle de temps considéré comprennent le fait qu'au moins un maximum local peut être attribué à la position de l'actionneur ;
12.6 des moyens pour comparer des caractéristiques de données provenant d'intervalles de temps, dans lesquels ces moyens sont configurés pour comparer les mêmes caractéristiques de données provenant du premier et du deuxième intervalles de temps susmentionnés ; et
12.7 des moyens pour établir et émettre un diagnostic ; dans lequel lesdits moyens peuvent établir et émettre un diagnostic lorsque lesdits moyens pour déterminer et comparer les caractéristiques des données détectent des différences dans les caractéristiques des données provenant desdits premier et deuxième intervalles de temps ;
12.8 dans lequel la soupape de positionnement (100) est configurée pour mettre en oeuvre un procédé selon l'une quelconque des revendications de procédé précédentes.

13. Programme d'ordinateur,
**caractérisé**
**en ce que** le programme d'ordinateur comprend des instructions exécutables qui, lorsqu'elles
sont exécutées sur une unité de calcul, un microcontrôleur, un DSP, un FPGA ou un ordinateur ou sur une pluralité de ceux-ci dans un réseau, exécutent le procédé selon l'une quelconque des revendications de procédé.

14. Support de données sur lequel est enregistrée une structure de données qui, après chargement dans une mémoire de travail et/ou une mémoire principale d'une unité de calcul, d'un microcontrôleur, d'un DSP, d'un FPGA ou d'un ordinateur ou d'une pluralité de ceux-ci dans un réseau, exécute le procédé selon l'une des revendications de procédé.

15. Module de commande pour une soupape de positionnement (100),
**caractérisé**
**en ce que** le module de commande fournit des moyens pour exécuter le procédé selon l'une
quelconque des revendications de procédé.
